# EUROPÄISCHE PATENTSCHRIFT

(11) **EP 2 885 669 B1**
(45) Veröffentlichungstag und Bekanntmachung des Hinweises auf die Patenterteilung: **15.01.2020**
(21) Anmeldenummer: 13762739.4
(22) Anmeldetag: 06.08.2013
(51) Int. Cl.: G02B 21/00, G02B 21/36

(54) **OPTISCHE ANORDNUNG UND EIN MIKROSKOP**
OPTICAL ARRANGEMENT AND A MICROSCOPE
SYSTÈME OPTIQUE ET MICROSCOPE

(30) Priorität: 16.08.2012 DE 102012214568
(43) Veröffentlichungstag der Anmeldung: 24.06.2015
(73) Patentinhaber: Leica Microsystems CMS GmbH, 35578 Wetzlar (DE)
(72) Erfinder: SCHUMANN, Christian, 35423 Lich (DE)
(74) Vertreter: Bradl, Joachim
(86) Internationale Anmeldenummer: PCT/DE2013/200105
(87) Internationale Veröffentlichungsnummer: WO 2014/026683

(56) Entgegenhaltungen:
- EP-A1- 2 587 295
- WO-A2-2011/059826
- DE-A1-102004 034 957
- JP-A- H05 164 970
- Y. WU ET AL: "Inverted selective plane illumination microscopy (iSPIM) enables coupled cell identity lineaging and neurodevelopmental imaging in Caenorhabditis elegans", PROCEEDINGS OF THE NATIONAL ACADEMY OF SCIENCES, Bd. 108, Nr. 43, 25. Oktober 2011 (2011-10-25), Seiten 17708-17713, XP055089764, ISSN: 0027-8424, DOI: 10.1073/pnas.1108494108

## Beschreibung

Die vorliegende Erfindung betrifft eine optische Anordnung in einem Mikroskop, mit einer Beleuchtungseinrichtung zur Erzeugung eines auf einer Beleuchtungsseite verlaufenden Beleuchtungslichtstrahls, einer Teilungseinrichtung zur Aufteilung des Beleuchtungslichtstrahls in mindestens zwei Teilbündel und einer Spiegelanordnung zur Reflexion der Teilbündel in einen Beleuchtungsbereich für eine Ebenenbeleuchtung einer Probe. Des Weiteren betrifft die vorliegende Erfindung ein Mikroskop mit einer entsprechenden optischen Anordnung.

Zur Beobachtung lebender biologischer Systeme mittels eines Lichtmikroskops ist es von großer Bedeutung, eine fotoinduzierte Schädigung einer Probe möglichst gering zu halten. Hierzu wurde das Konzept der Beleuchtung mit einem Lichtblatt in der Detektionsebene des Mikroskops entwickelt. Hierdurch ist eine Mikroskopie mit selektiver Ebenenbeleuchtung (Selective Plane Illumination Microscopy, SPIM) ermöglicht. Die Ausbreitungsrichtung des Beleuchtungslichts ist in diesem Fall senkrecht zur Detektionsrichtung, wobei die Einkopplung in das Probenvolumen über eine zum Detektionsobjektiv senkrecht stehende Beleuchtungsoptik - bspw. ein zweites Beleuchtungsobjektiv - erfolgen kann. Dabei kann es zu Abschattungseffekten durch die Probe kommen. Eine Beleuchtung der Probe aus unterschiedlichen Richtungen ist daher zweckmäßig, um dieses Problem zu umgehen. Dies wurde bisher zeitlich sequenziell und/oder unter großem mechanischem Aufwand bewerkstelligt. Die mikroskopische Probenvorbereitung wird hierdurch stark beeinflusst und ist mit konventioneller Lichtmikroskopie häufig nicht kompatibel.

Aus der DE 10 2004 034 957 A1 ist eine optische Anordnung in einem Mikroskop bekannt, bei der mittels einer Beleuchtungseinrichtung ein auf einer Beleuchtungsseite verlaufender Beleuchtungslichtstrahl erzeugt wird. Mittels einer Teilungseinrichtung T wird der Beleuchtungslichtstrahl in zwei Teilbündel Ls1 und Ls2 aufgeteilt. Mittels einer Spiegelanordnung R1, R2 werden die Teilbündel in einen Beleuchtungsbereich für eine Ebenenbeleuchtung einer Probe reflektiert.

Im Konkreten werden die beiden Teilbündel Ls1 und Ls2 durch in einem Gehäuse H ausgebildete Lichtführungen LF seitlich an einem Objektiv Lz vorbeigeführt und dann über die Spiegelanordnung in den Beleuchtungsbereich zur Probe hin reflektiert. Das Objektiv Lz ist innerhalb des Gehäuses H angeordnet, so dass die Objektivdimensionen auf die Dimensionen des Gehäuses abgestimmt werden müssen oder umgekehrt. Hierdurch ist letztendlich eine komplexe Konstruktion mit in dem Gehäuse H ausgebildeten Lichtführungen LF und einem darin eingepassten Objektiv realisiert. Eine freie Wahl des Objektivs ist aufgrund der Dimensionsvorgabe durch das Gehäuse oft nicht möglich. Eine Detektion von Lichtsignalen erfolgt von der Beleuchtungsseite aus durch das in das Gehäuse eingepasste Objektiv.

Des Weiteren ist aus der DE 102 57 423 A1 eine optische Anordnung in einem Mikroskop bekannt, mit der ebenfalls eine Ebenenbeleuchtung einer Probe ermöglicht ist. Im Konkreten weist die bekannte Anordnung zwei senkrecht zueinander stehende Objektive für einerseits eine Beleuchtung und andererseits eine Detektion auf. Eine solche Anordnung erfordert eine sehr speziell angepasste Probenaufnahme und ist oftmals geometrisch und konstruktiv nur sehr schwierig realisierbar.

Ausgehend vom bekannten Stand der Technik nach der DE 10 2004 034 957 A1 liegt der vorliegenden Erfindung die Aufgabe zugrunde, eine optische Anordnung sowie ein Mikroskop der eingangs genannten Art derart auszugestalten und weiterzubilden, dass eine flexible Anwendung mit konstruktiv einfachen Mitteln erreicht ist.

Erfindungsgemäß wird die voranstehende Aufgabe durch eine optische Anordnung mit den Merkmalen des Anspruchs 1 sowie durch ein Mikroskop mit den Merkmalen des Anspruchs 12 gelöst. Danach ist die optische Anordnung durch eine auf der der Beleuchtungsseite abgewandten Seite des Beleuchtungsbereichs angeordnete Detektionsoptik gekennzeichnet.

In erfindungsgemäßer Weise ist zunächst erkannt worden, dass es bei einer optischen Anordnung mit einer Ebenenbeleuchtung nicht erforderlich ist, die Beleuchtungsoptik und die Detektionsoptik auf derselben Seite eines Beleuchtungsbereichs oder einer Probe zu realisieren. Hierdurch können die Ausgestaltung der Beleuchtungsoptik und die Ausgestaltung der Detektionsoptik unabhängig voneinander realisiert werden, wodurch ein hohes Maß an Flexibilität in der Gestaltung und Anpassung an unterschiedliche Anwendungsbereiche gewährleistet ist. Insbesondere ist die Dimensionierung und Ausgestaltung eines für die Detektion dienenden Objektivs nicht mehr an irgendwelche Dimensionierungen eines Gehäuses mit Lichtführungen gebunden. In weiter erfindungsgemäßer Weise ist eine Detektionsoptik ganz konkret auf der der Beleuchtungsseite abgewandten Seite des Beleuchtungsbereichs angeordnet. Dies bietet eine besonders vielseitige Gestaltungsmöglichkeit sowohl für die Beleuchtungsoptik als auch für die Detektionsoptik, da eine weitestmögliche räumliche Trennung zwischen Beleuchtungsoptik und Detektionsoptik realisiert ist.

Folglich sind mit der erfindungsgemäßen optischen Anordnung und dem erfindungsgemäßen Mikroskop eine flexible Anwendung mit konstruktiv einfachen Mitteln erreicht.

Im Konkreten ist eine auf der Beleuchtungsseite angeordnete Beleuchtungsoptik koaxial zur Detektionsoptik aufgebaut. In jedem Fall ist eine Beleuchtungsoptik von der Detektionsoptik getrennt, so dass die Wahl eines Detektionsobjektivs unabhängig von der Beleuchtungsoptik an jedwede experimentelle Situation anpassbar ist. Der koaxiale Aufbau von Beleuchtungsoptik und Detektionsoptik hat einen besonders einfachen Aufbau der optischen Anordnung zur Folge.

Je nach Anwendungsfall und im Hinblick auf eine konstruktiv einfache Ausgestaltung könnte die Spiegelanordnung eine oder mehrere Gruppen von Spiegeln oder Planspiegeln oder einen Ringspiegel oder mehrere Ringspiegelsegmente aufweisen. Hinsichtlich der konkreten Ausgestaltung der Spiegelanordnung können unterschiedliche Anwendungsfälle berücksichtigt werden.

Hinsichtlich einer einfachen und sicheren Aufteilung des Beleuchtungslichtstrahls in mindestens zwei Teilbündel könnte die Teilungseinrichtung eine Polarisationsoptik oder Elemente zur Pupillenteilung, vorzugsweise reflektive oder transmittive Elemente, aufweisen. Alternativ hierzu könnte die Teilungseinrichtung mindestens ein Prisma oder eine Blende aufweisen. In jedem Fall könnte die Teilungseinrichtung als Modul ausgebildet sein, um eine einfache Implementierung und Anordnung innerhalb einer optischen Anordnung oder eines Mikroskops zu ermöglichen.

Bei einer vorteilhaften Ausgestaltung könnte die Teilungseinrichtung für sich gesehen oder in Kombination mit verbleibenden Elementen der Beleuchtungsoptik eine Erzeugung von Lichtblättern aus den Teilbündeln ermöglichen. Alternativ hierzu könnte nach der Teilungseinrichtung ein Mittel zur jeweiligen Erzeugung eines Lichtblatts aus den Teilbündeln angeordnet sein. Ein derartiges Mittel zur jeweiligen Erzeugung eines Lichtblatts könnte in weiter vorteilhafter Weise als Modul ausgebildet sein, um einfach in eine optische Anordnung oder in ein Mikroskop integriert werden zu können.

Im Konkreten könnte das Mittel zur jeweiligen Erzeugung eines Lichtblatts eine Zylinderoptik oder einen Scanner aufweisen. Beide Ausgestaltungen ermöglichen eine sichere Erzeugung eines Lichtblatts. Die Wahl für die eine oder die andere Erzeugungstechnik könnte in vorteilhafter Weise vom jeweiligen Anwendungsfall abhängig gemacht werden.

In weiter vorteilhafter Weise könnten die Teilbündel oder Lichtblätter von einer optischen Achse vorgebbar beabstandet und parallel zur optischen Achse oder nahe der optischen Achse und unter einem Winkel ungleich 0° zur optischen Achse geführt sein. Durch die von der optischen Achse beabstandete oder nahe der optischen Achse realisierte Führung der Teilbündel oder Lichtblätter verbleibt auf der optischen Achse ein relativ großer nutzbarer Bereich zur Anordnung der Probe. Dies ermöglicht die Untersuchung einer Vielzahl unterschiedlicher Proben, die häufig einen beträchtlichen Raumbedarf haben.

Im Hinblick auf eine weitere vorteilhafte Ausgestaltung der optischen Anordnung bzw. des Mikroskops könnte die Anordnung ein Mittel zur Kontrolle und/oder Beeinflussung der Kohärenz des Beleuchtungslichtstrahls aufweisen. Ein derartiges Mittel könnte in weiter vorteilhafter Weise als Modul ausgebildet sein, das bspw. - in Beleuchtungsrichtung gesehen - noch vor der Teilungseinrichtung innerhalb der optischen Anordnung angeordnet sein könnte. Mit einem derartigen Mittel könnte die Interferenzfähigkeit oder das Interferenzverhalten der Teilbündel im Beleuchtungsbereich der Probe in vorteilhafter Weise beeinflusst und/oder gestaltet werden.

Bei einer weiter alternativen Ausgestaltung könnte die Anordnung ein Mittel zur Kontrolle und/oder Beeinflussung der Interferenzfähigkeit der Teilbündel oder Lichtblätter im Beleuchtungsbereich aufweisen. Diesbezüglich könnte die Anordnung alternativ oder zusätzlich ein Mittel zur selektiven Beeinflussung des Polarisationszustands und/oder der Kohärenzlänge mindestens eines Teilbündels oder Lichtblatts aufweisen. Weiterhin könnte die Anordnung ein Mittel zur Phasenänderung mindestens eines Teilbündels oder Lichtblatts aufweisen.

Hinsichtlich der Verminderung von Abschattungseffekten sowie im Fall der strukturierten Beleuchtung der richtungsunabhängigen Auflösungserhöhung könnten die Polarwinkel einer Einfallsrichtung der Teilbündel oder Lichtblätter relativ zum Beleuchtungsbereich oder relativ zu der Probe einstellbar oder veränderbar sein. Hierdurch kann eine Beleuchtung von gewünschten Seiten der Probe aus erfolgen. Im Konkreten und bei einer besonders einfachen Ausgestaltung könnten hierzu die Teilungseinrichtung und weiter vorzugsweise die Teilungseinrichtung und die Spiegelanordnung um eine optische Achse drehbar sein.

Mit der erfindungsgemäßen optischen Anordnung ist ein einfach zu implementierendes und an ein konventionelles - inverses - Lichtmikroskop adaptierbares System zur Ebenenbeleuchtung realisiert. Dabei ist es möglich, die Beleuchtungsebene oder den Beleuchtungsbereich gleichzeitg aus mehreren Richtungen zu beleuchten.

Im Folgenden werden nochmals wichtige Aspekte von Ausführungsformen der vorliegenden Erfindung erläutert:
Durch eine selektive Beeinflussbarkeit der Polarisationszustände der Lichtblätter besteht die Möglichkeit, deren Interferenzfähigkeit - bei Nutzung einer Lichtquelle mit ausreichender Kohärenzlänge - zu beeinflussen. Insbesondere ermöglicht die vorliegende Erfindung die Erzeugung von gegenlaufenden Paaren von Lichtblättern und die Erzeugung einer Lichtblattbeleuchtung unter Nutzung des vollen Polarwinkelspektrums von 2π.

Zur einfachen Adaption des Konzepts der Ebenenbeleuchtung an ein konventionelles inverses Lichtmikroskop ist es zweckmäßig, die Beleuchtungsoptik koaxial zur Detektionsoptik aufzubauen (wie einen klassischen Kondensor) und die Umlenkung des Beleuchtungslichts außerhalb der Beleuchtungsoptik zu bewerkstelligen. Dazu wird im Rahmen dieser Erfindung eine Spiegelanordnung vor der Beleuchtungsoptik vorgefasst, die sich im Sichtfeld der Beleuchtungsoptik befindet. Dabei kann es sich um eine oder mehrere Gruppen von gegenüber angeordneten Planspiegeln mit geeignetem Kippwinkel handeln oder auch um einen Ringspiegel. Zur Beleuchtung der Probe seitlich mittels dieser Spiegelanordnung wird die Beleuchtungsoptik außerhalb der optischen Achse genutzt, so dass auf der gemeinsamen optischen Achse der Beleuchtungs- und Detektionsoptik ein nutzbarer Bereich zur Anordnung der Probe entsteht.

Aufgabe der Beleuchtungsoptik ist die definierte Einkopplung des Beleuchtungslichts in den Bereich der Probe und - je nach Ausführungsform - die Erzeugung des Lichtblatts. Dabei kann es sich im einfachsten Fall um eine Zylinderoptik handeln, ggf. mit vorgefasster Glasplatte zur Abdeckung eines Einbettmediums. Es ist aber auch denkbar, ein komplexeres optisches System, bspw. ein Mikroskopobjektiv, zu verwenden und zur Erzeugung des Lichtblatts entweder eine Zylinderoptik zur Fokussierung in die Pupille der Beleuchtungsoptik - simultane Ausleuchtung des Felds - oder auch einen Scanner zum sequentiellen Abrastern des Felds zu nutzen.

Im Rahmen der vorliegenden Erfindung wird die Beleuchtungsoptik nun simultan mit mehreren Lichtbündeln beleuchtet, so dass das Beleuchtungslicht die Probe seitlich aus mindestens zwei Richtungen gleichzeitig beleuchtet. Die Aufspaltung des Beleuchtungslichts in diese mehreren Teilbündel kann dabei bspw. über ein polarisationsoptisches Konzept oder aber durch Pupillenteilung erfolgen. Im Fall der Pupillenteilung kann diese entweder durch reflektive oder transmittive Elemente erfolgen und eine diskrete oder kontinuierliche Teilung des Lichts erreichen.

Im Rahmen einer weiteren Ausführungsform der vorliegenden Erfindung kann die Interferenzfähigkeit der Lichtbündel im Bereich der Probe beeinflusst werden. Dabei kann die Interferenzfähigkeit entweder durch polarisationsoptische Methoden oder durch Modifikation der Kohärenzlänge des Beleuchtungslichts, bspw. durch Streuung, beeinflusst werden. Dies kann im Fall der Aufteilung des Lichts in eine diskrete Anzahl von Teilbündeln gezielt pro Teilbündel erfolgen, bspw. durch räumliche Trennung oder polarisationsoptische Methoden. Für den Fall der Teilung des Beleuchtungslichts in zwei Teilbündel können die Polarisationszustände der beiden Teilbündel durch geeignete Maßnahmen orthogonal zueinander realisiert werden. Im Fall einer Teilung in mehr als zwei Teilbündel kann die Interferenzfähigkeit durch Änderung der Kohärenzlänge beeinflusst werden.

Bei Kohärenz und gleicher Polarisationsrichtung der einzelnen Teilbündel zueinander entsteht in der Probe eine über das Blickfeld strukturierte Beleuchtung, die eine Rekonstruktion des Bildes mit erhöhter Auflösung zulässt. Dazu ist die Möglichkeit einer Phasenänderung der einzelnen Teilbündel des Beleuchtungslichts erforderlich, die bei räumlicher Trennung der Teilbündel einfach möglich ist, bei Aufspaltung der Teilbündel durch eine Polarisationsoptik auch durch doppelbrechende Elemente. Falls keine Interferenzfähigkeit - aus Kohärenz- oder Polarisationsgründen - vorliegt, ist eine homogene Ausleuchtung des Bildfelds möglich. Diese entsteht auch bei Nutzung einer ungeraden Anzahl von kohärenten Teilbündeln mit äquidistanten Polarwinkeldifferenzen.

Eine Drehung der Polarwinkel der Einfallsrichtung der Teilbündel relativ zur Probe - im Fall der strukturierten Beleuchtung auch der Richtung der Strukturierung - ermöglicht eine weitere Verminderung von Abschattungseffekten, sowie im Fall der strukturierten Beleuchtung eine richtungsunabhängige Auflösungserhöhung. Dazu können auch Interferenzmuster in der Probe erzeugt werden, die durch Teilstrahlen gebildet werden, deren relative Ausbreitungsrichtung zueinander Winkel ungleich 180° einschließt. Bspw. erzeugt ein Winkel der Teilstrahlen von 90° zueinander eine um 45° gedrehte Strukturierung.

Es gibt nun verschiedene Möglichkeiten, die Lehre der vorliegenden Erfindung in vorteilhafter Weise auszugestalten und weiterzubilden. Dazu ist einerseits auf die nachgeordneten Ansprüche und andererseits auf die nachfolgende Erläuterung bevorzugter Ausführungsbeispiele der Erfindung anhand der Zeichnung zu verweisen. In Verbindung mit der Erläuterung bevorzugter Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: in einer schematischen Darstellung ein erstes Ausführungsbeispiel einer erfindungsgemäßen optischen Anordnung,
- Fig. 2: in einer schematischen Darstellung ein Ausführungsbeispiel der Beleuchtungsoptik von zwei Seiten aus gesehen,
- Fig. 3: in einer schematischen Darstellung und von zwei Seiten ein weiteres Ausführungsbeispiel der Beleuchtungsoptik,
- Fig. 4: in einer schematischen Darstellung ein weiteres Ausführungsbeispiel der Beleuchtungsoptik sowie unterschiedliche Möglichkeiten der Realisierung der Spiegelanordnung,
- Fig. 5: in einer schematischen Darstellung zwei Ausführungsbeispiele der Teilungseinrichtung,
- Fig. 6: in einer schematischen Darstellung weitere Ausführungsbeispiele der Teilungseinrichtung,
- Fig. 7: in einer schematischen Darstellung ein weiteres Ausführungsbeispiel der Teilungseinrichtung,
- Fig. 8: in einer schematischen Darstellung ein weiteres Ausführungsbeispiel der Teilungseinrichtung,
- Fig. 9: in einer schematischen Darstellung ein weiteres Ausführungsbeispiel der Teilungseinrichtung sowie unterschiedliche Blendenformen,
- Fig. 10: in einer schematischen Darstellung ein Ausführungsbeispiel einer Lichtblatterzeugung und
- Fig. 11: in einer schematischen Darstellung ein weiteres Ausführungsbeispiel einer Lichtblatterzeugung.

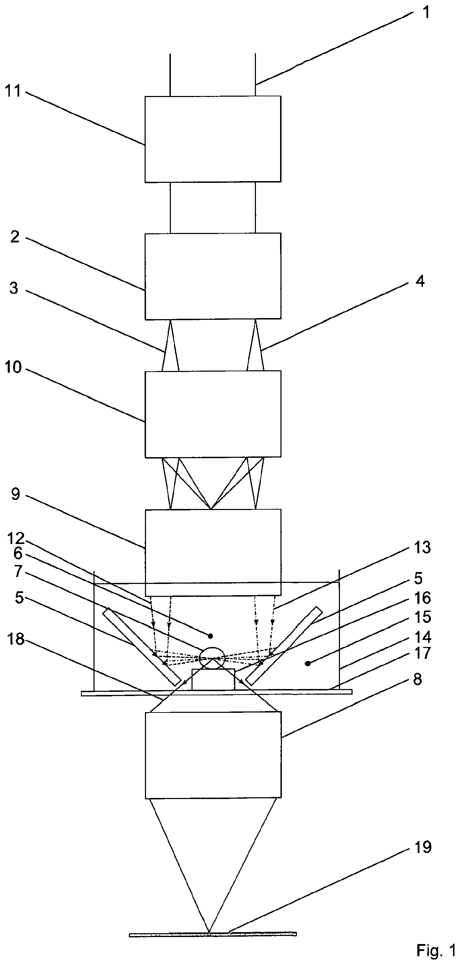

Fig. 1 zeigt in einer schematischen Darstellung ein erstes Ausführungsbeispiel einer erfindungsgemäßen optischen Anordnung in einem Mikroskop. Die optische Anordnung weist eine Beleuchtungseinrichtung zur Erzeugung eines auf einer Beleuchtungsseite verlaufenden Beleuchtungslichtstrahls 1 auf. Des Weiteren weist die optische Anordnung eine Teilungseinrichtung 2 zur Aufteilung des Beleuchtungslichtstrahls 1 in mindestens zwei Teilbündel 3 und 4 und eine Spiegelanordnung 5 zur Reflexion der Teilbündel 3 und 4 in einen Beleuchtungsbereich 6 für eine Ebenenbeleuchtung einer Probe 7 auf. Im Hinblick auf eine flexible Anwendung mit konstruktiv einfachen Mitteln weist die optische Anordnung weiterhin eine auf der der Beleuchtungsseite abgewandten Seite des Beleuchtungsbereichs 6 angeordnete Detektionsoptik 8 auf. Mit anderen Worten sind auf der Beleuchtungsseite neben dem Beleuchtungslichtstrahl 1 sämtliche weiteren für die Beleuchtung der Probe 7 dienenden optischen Elemente wie bspw. die Teilungseinrichtung 2 und die Spiegelanordnung 5 angeordnet. Auf der der Beleuchtungsseite abgewandten Seite des Beleuchtungsbereichs 6 ist lediglich die Detektionsoptik 8 angeordnet. Durch diese räumliche Trennung der für die Beleuchtung dienenden optischen Elemente von der Detektionsoptik 8 ist ein einfacher Aufbau der optischen Anordnung ermöglicht.

Bei dem hier gezeigten Ausführungsbeispiel ist des Weiteren eine auf der Beleuchtungsseite angeordnete Beleuchtungsoptik 9 koaxial zur Detektionsoptik 8 aufgebaut. Die Spiegelanordnung 5 besteht aus zwei einander gegenüberliegend angeordneten Planspiegeln, so dass eine Beleuchtung der Probe 7 aus um 180° zueinander versetzten Richtungen ermöglicht ist.

Nach der Teilungseinrichtung 2 ist ein Mittel 10 zur jeweiligen Erzeugung eines Lichtblatts aus den Teilbündeln 3 und 4 angeordnet. Das Mittel 10 ist ebenso wie die Teilungseinrichtung 2 als Modul ausgebildet.

Die Teilbündel 3 und 4 sind von einer optischen Achse beabstandet geführt. Die optische Achse verläuft hierbei parallel zum Beleuchtungslichtstrahl 1 durch die Probe 7 hindurch. In diesem Bereich der Optik, d. h. nach der Teilungseinrichtung 2, sind die Teilbündel 3 und 4 nicht zwangsläufig zur optischen Achse beabstandet, sondern können auch - im Sinne eines Feldwinkels - gekippt sein. Die fourier-transformierende Eigenschaft einer Beleuchtungsoptik, beispielsweise Mikroskopobjektiv, wird diese Kippung dann in eine Beabstandung im Bereich der Probe 7 transformieren.

Des Weiteren weist die Anordnung ein Mittel 11 zur Kontrolle und/oder Beeinflussung der Kohärenz des Beleuchtungslichtstrahls 1 auf. Das Mittel 11 ist ebenfalls als Modul ausgebildet.

Die aus der Beleuchtungsoptik 9 austretenden Teilbündel 12 und 13 sind zur Erzeugung eines Lichtblatts im Bereich der Probe 7 geeignet. Hierzu werden sie mittels der Spiegelanordnung 5 auf die Probe 7 reflektiert.

Die Probe 7 ist in einem Probenbehälter 14 mit einem darin angeordneten Einbettmedium 15 angeordnet. Die Probe 7 ist auf einem Spacer 16 angeordnet, der wiederum auf einem Probenträger 17 angeordnet ist. Der Probenträger 17 ist in axialer Richtung, d.h. entlang der optischen Achse verstellbar bzw. positionierbar.

Ein Aperturbündel 18 wird über die Detektionsoptik 8 zu einem Photodetektor 19 oder einer Kamera geleitet. Alternativ oder zusätzlich hierzu könnte ein Einblick mit einem Okular realisiert sein.

Das Konzept des vorliegenden Ausführungsbeispiels ist modularer Natur und kann in mehrere Teile zerlegt werden, die nicht notwendigerweise in sämtlichen möglichen Ausführungsbeispielen der Erfindung vorhanden sein müssen. Weiterhin kann sich die Reihenfolge der verschiedenen Module oder Teilsysteme von der in Fig. 1 gezeigten Reihenfolge unterscheiden. Schnittstellen zwischen den Modulen oder Teilsystemen sind die jeweiligen Eintritts- und Austrittspupillen. Kennzeichen des vorliegenden Ausführungsbeispiels sind nicht die einzelnen Module für sich, sondern die Anordnung der einzelnen Module zu einem Komplettsystem zur einfachen multidirektionalen Ebenenbeleuchtung.

Zur Beeinflussung der Interferenzfähigkeit des Beleuchtungslichtstrahls 1 dient das Mittel 11 zur Kontrolle und/oder Beeinflussung der Kohärenz des Beleuchtungslichtstrahls 1. Falls die Aufteilung des Beleuchtungslichtstrahls 1 in mehrere Teilbündel 3 und 4 die Interferenzfähigkeit des Beleuchtungslichtstrahls 1 nicht stört, kann die Interferenzfähigkeit auf diese Weise beeinflusst werden.

Zentraler Bestandteil des Ausführungsbeispiels ist die Teilungseinrichtung 2, durch die Teilbündel 3 und 4 erzeugt werden, die gleichzeitig dieselbe Ebene der Probe 7 über die Spiegelanordnung 5 beleuchten. Zur Kontrolle der Interferenzfähigkeit der Teilbündel 12 und 13 im Bereich der Probe 7 dient das Mittel 11 zur Kontrolle und/oder Beeinflussung der Kohärenz.

Bei dem Ausführungsbeispiel gemäß Fig. 1 ist ein Mittel 10 zur jeweiligen Erzeugung eines Lichtblatts aus den Teilbündeln 3 und 4 vorgesehen. Dabei kann es sich bspw. um einen Scan-System zur Abrasterung der Beleuchtungsebene mit einem dünnen Lichtfaden handeln oder aber um ein anamorphotisches fokussierendes System in Form einer Zylinderoptik. Falls die Kombination aus Teilungseinrichtung 2 und Beleuchtungsoptik 9 ohne weitere Hilfsmittel ein Lichtblatt in der Probe 7 erzeugt, kann auf das Mittel 10 zur Erzeugung eines Lichtblatts verzichtet werden.

Aufgabe der Beleuchtungsoptik 9 ist die Einkopplung des Beleuchtungslichts in den Probenraum mit dem Einbettmedium 15 sowie in Kombination mit dem Mittel 10 zur Lichtblatterzeugung und der Spiegelanordnung 5 die Erzeugung der Lichtblätter in der Probe 7. Es ist zweckmäßig, eine feste mechanische Verbindung zwischen der Beleuchtungsoptik 9 und der Spiegelanordnung 5 herzustellen. Um eine geeignete Relativposition zwischen der Spiegelanordnung 5 und der Probe 7 zu realisieren, kann es notwendig sein, einen Spacer 16 unter der Probe 7 anzuordnen, um diese anzuheben.

Als Kontrastmethode zur Bildgebung ist insbesondere Lumineszenz - Fluoreszenz oder Phosphoreszenz - geeignet, aber auch Dunkelfeld-Kontrast ist möglich. Das von der Probe 7 ausgesandte Streu- oder Lumineszenzlicht in Form eines Aperturbündels 18 wird mittels der Detektionsoptik 8 gesammelt und auf einen positionsempfindlichen Detektor wie bspw. einen Kamera-Chip abgebildet. Zur Volumenbildgebung kann mit Hilfe des Probenträgers 17 die Probe 7 axial verfahren werden, während die Beleuchtungsoptik 9 samt Spiegelanordnung 5 sowie Detektionsoptik 8 ortsfest bleiben.

Die Spiegelanordnung 5 kann aus einem sich gegenüberstehenden Spiegelpaar bestehen, falls die Aufteilung des Beleuchtungslichtstrahls 1 in zwei Teilbündel 3 und 4 erfolgt. Es kann sich aber auch um N Spiegel handeln, falls eine Aufteilung in N Teilbündel erfolgt. Dabei muss N nicht notwendigerweise geradzahlig sein. Es kann sich bei der Spiegelanordnung 5 aber auch um einen um die Probe 7 angeordneten Ringspiegel handeln oder um mehrere Ringspiegelsegmente. Eine durch eine nicht ebene Spiegelfläche bedingte Änderung der Geometrie der Lichtblätter 12 und 13 kann durch eine entsprechende Korrektionsoptik bei der Bündelaufspaltung mittels des Mittels 10 kompensiert werden.

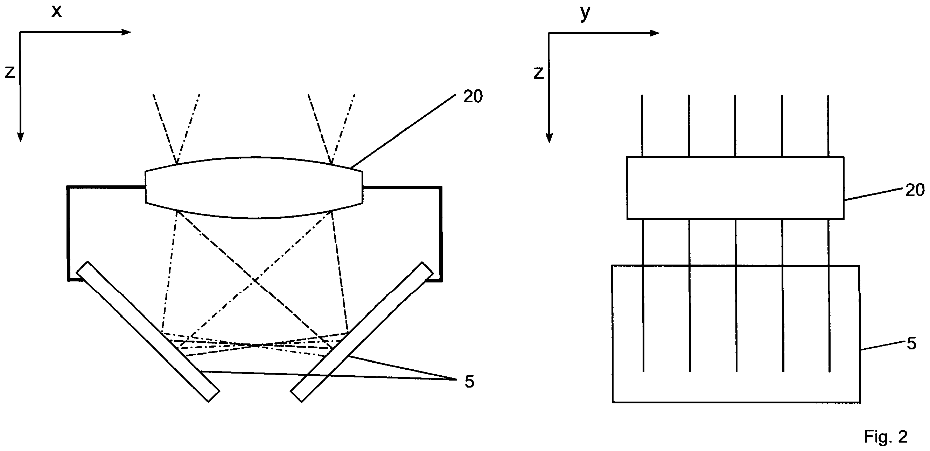

Fig. 2 zeigt in einer schematischen Darstellung und von zwei Seiten aus gesehen ein Ausführungsbeispiel der Beleuchtungsoptik und des Mittels zur Lichtblatterzeugung, wobei beide Komponenten durch eine einfache Zylinderlinse 20 gebildet sind.

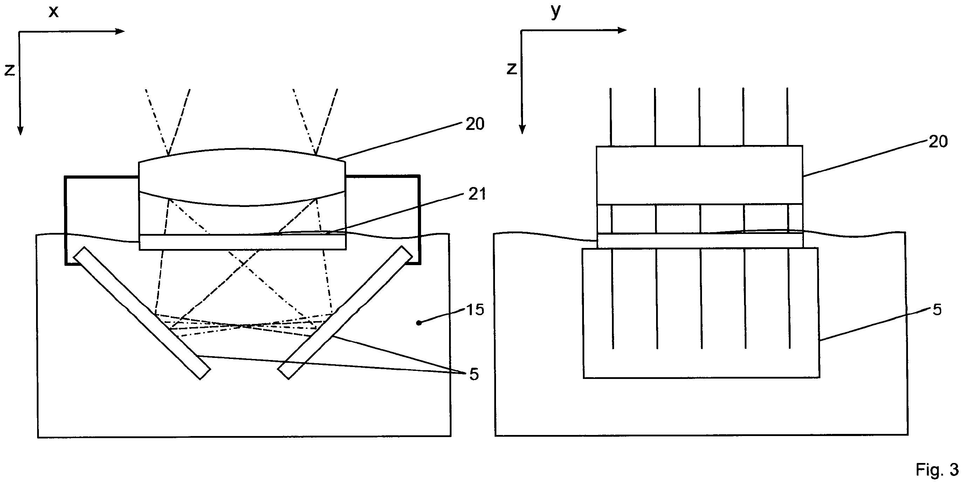

Fig. 3 zeigt in einer schematischen Darstellung und aus zwei Richtungen ein weiteres Ausführungsbeispiel der Beleuchtungsoptik und des Mittels zur Lichtblatterzeugung, wobei auch hier beide Komponenten durch eine einfache Zylinderlinse 20 gebildet sind. Zusätzlich ist hier noch eine Planplatte 21 vorgesehen, um eine definierte Übergangsoberfläche zum Einbettmedium 15 herzustellen.

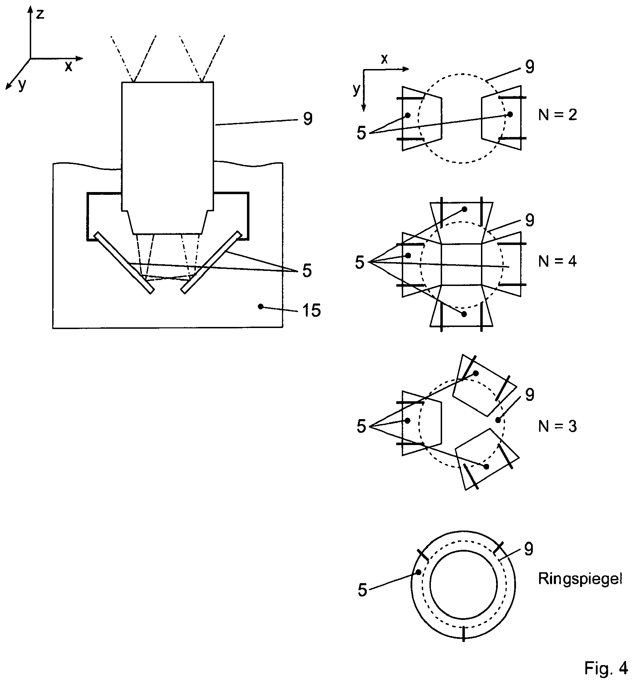

Fig. 4 zeigt in einer schematischen Darstellung ein weiteres Ausführungsbeispiel der Beleuchtungsoptik 9, wobei es sich hierbei im Konkreten um ein Mikroskopobjektiv handelt. Die Erzeugung der Lichtblätter erfolgt dabei in einem separaten Mittel 10 oder Modul.

Des Weiteren sind in der rechten Hälfte der Fig. 4 unterschiedliche Möglichkeiten der Realisierung der Spiegelanordnung 5 gezeigt. Dabei handelt es sich im Konkreten um zwei, drei oder vier einzelne Spiegel oder um einen Ringspiegel.

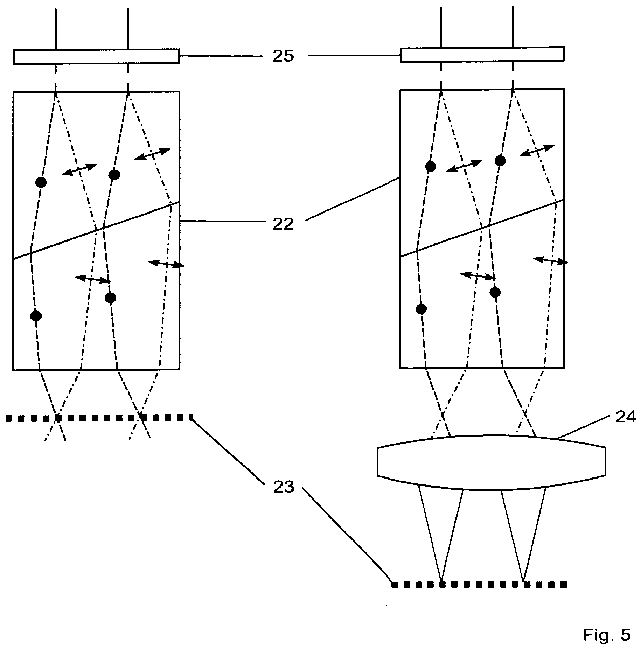

Zur Aufteilung des Beleuchtungslichtstrahls 1 in mehrere Teilbündel 3 und 4 können unterschiedliche Methoden verwendet werden. Eine Möglichkeit sind polarisationsoptische Methoden gemäß Fig. 5. Durch Einbringen von λ/2-Verzögerungselementen 25 kann die Polarisationsrichtung von linear polarisiertem Beleuchtungslicht relativ zur schnellen Achse des Nomarski-Prismas kontrolliert und so das Intensitätsverhältnis der Teilbündel eingestellt werden. Fig. 5 zeigt in einer schematischen Darstellung zwei Ausführungsbeispiele einer Teilungseinrichtung. Hierbei wird ein entsprechend geschnittenes Nomarski-Prisma 22 mit um 45° zur schnellen Achse linear polarisiertem Licht oder mit zirkular polarisiertem Licht beleuchtet. Die beiden austretenden Teilstrahlen sind dann orthogonal zueinander polarisiert und weisen einen Winkel von ±α zur optischen Achse auf. Die Ausführung des Prismas 22 kann eine Lage der Austrittspupille 23 außerhalb des Prismas 22 bereitstellen. Falls das nicht der Fall ist, können beide Strahlbündel mit Hilfe einer anamorphotischen Optik 24 auf eine gemeinsame Austrittspupille 23 abgebildet werden.

In einer weiteren, hier nicht gezeigten Ausführungsform können zwei Anordnungen der zuletzt beschriebenen Art nacheinander angeordnet werden, wobei das zweite System um 45° entlang der optischen Achse gedreht ist. So entstehen vier Teilbündel, die auf eine gemeinsame Austrittpupille abgebildet werden können.

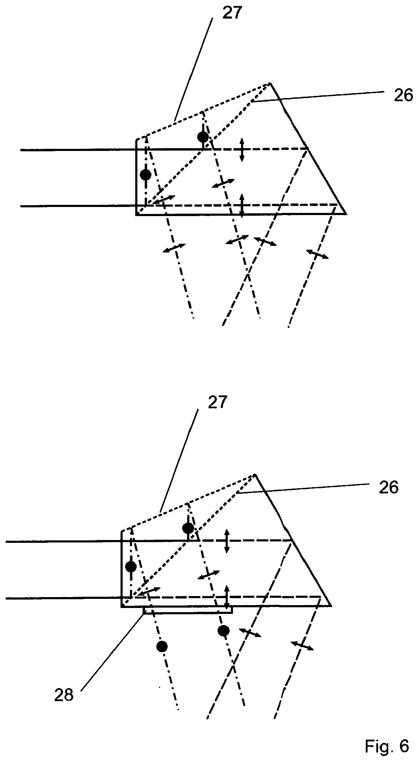

Fig. 6 zeigt in einer schematischen Darstellung eine weitere Ausführungsform einer Teilungseinrichtung, wobei eine spezielle Prismenanordnung eine Aufteilung des Beleuchtungslichts in zwei Teilbündel gewährleistet. Diese Ausführung kann eine polarisationsteilende Schicht 26 und eine λ/2-Schicht 27 aufweisen. Durch eine weitere λ/2-Schicht 28 können senkrechte Polarisationsrichtungen hergestellt werden. Auch hier können zwei Systeme kaskadiert werden.

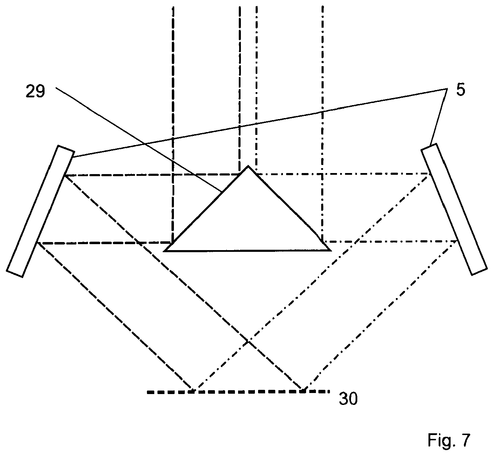

Auch eine Erzeugung mehrerer Teilbündel gleicher Polarisation ist durch eine Pupillenteilung möglich. In solch einer Anordnung kann die Interferenzfähigkeit der einzelnen Teilbündel separat über die Änderung der Kohärenzlänge beeinflusst werden. Fig. 7 zeigt in einer schematischen Darstellung eine weitere Ausführungsform einer Teilungseinrichtung, wobei ein Reflektionsprisma 29 zur Pupillenteilung in N Teilstrahlen genutzt wird, bspw. Dachkant für zwei Teilstrahlen, Tetraeder für drei Teilstrahlen, Pyramide für vier Teilstrahlen etc.. Dabei werden die einzelnen Teilstrahlen mit einer geeigneten Spiegelanordnung 5 wieder auf eine gemeinsame Austrittspupille 30 abgebildet.

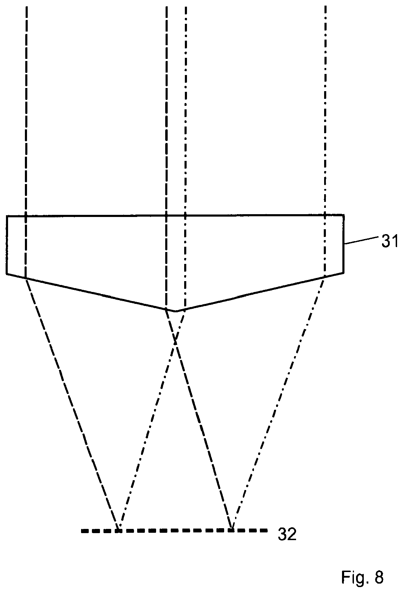

Fig. 8 zeigt in einer schematischen Darstellung ein weiteres Ausführungsbeispiel einer Teilungseinrichtung. Dabei wird ein Transmissionsprisma 31 genutzt, um in Transmission mehrere Teilbündel zu erzeugen. Diese können mit einer geeigneten Optik auf eine gemeinsame Austrittpupille 32 abgebildet werden.

In einer weiteren, hier nicht gezeigten Ausführungsform ist es weiterhin möglich, mit Hilfe eines Axicons ein kontinuierliches Polarwinkelspektrum - Ring - an Beleuchtungsteilstrahlen zu erzeugen. Mit Hilfe einer geeigneten Optik kann dieser Ring in eine gemeinsame Austrittspupille abgebildet werden.

Ein weiteres Ausführungsbeispiel, das eine kontinuierliche Teilung des Beleuchtungslichtstrahls 1 ermöglicht, besteht in der Nutzung reflektiver statt transmittiver Optik. Hierbei darf auf das Ausführungsbeispiel gemäß Fig. 7 verwiesen werden, wobei hier anstatt des Reflektionsprismas 29 ein verspiegelter Kegel verwendet werden kann und das entstehende Licht mit Hilfe eines Ringspiegels 5 auf eine Austrittspupille 30 abgebildet wird.

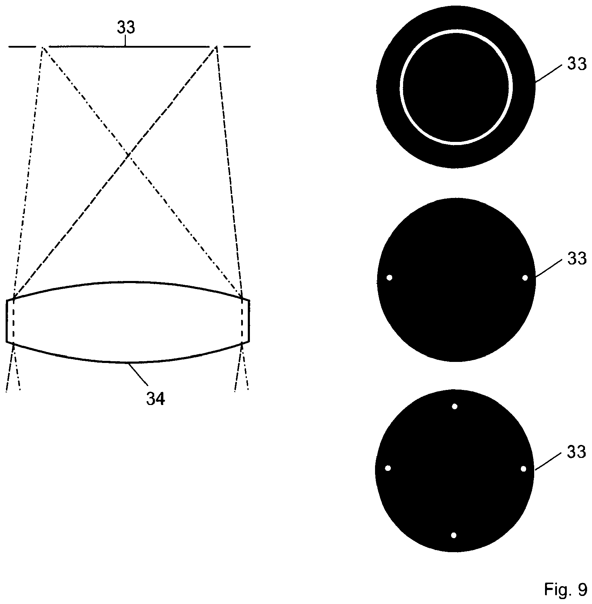

Fig. 9 zeigt in einer schematischen Darstellung ein weiteres Ausführungsbeispiel einer Teilungseinrichtung. Dabei wird ein kontinuierliches Polarwinkelspektrum bei festem Azimuthwinkel erzeugt, wobei hierzu eine ringförmige Blende 33 verwendet wird, die durch eine Abbildungsoptik 34 abgebildet wird, in deren Objektfläche die Ringblende steht. Zur Erzeugung eines diskreten Polarwinkelspektrums kann die Blende auch punktförmige Durchgänge oder Kreissegmentdurchgänge aufweisen. In der rechten Hälfte der Fig. 9 sind hierzu Beispiele einer Ringblende 33 und zweier Blenden 33 mit diskreten punktförmigen Durchgängen gezeigt.

Bei einem weiteren, hier nicht gezeigten Ausführungsbeispiel ist die Bündelteilung und Lichtblatterzeugung in einem diffraktiven optischen Element realisiert. Auch eine Kombination aus diffraktiven, refraktiven und reflektiven Elementen kann zur Lichtbündelteilung, eventuell kombiniert mit der Lichtblatterzeugung, genutzt werden.

Im Fall einer kontinuierlichen Pupillenteilung, bspw. die Ausführungsbeispiele gemäß Fig. 8 und Fig. 9, wird ein Lichtring durch die Beleuchtungsoptik, vorzugsweise ein Mikroskopobjektiv, und eine Spiegelanordnung 5, vorzugsweise ein Ringspiegel, dergestalt in die Probe abgebildet, dass die Teilbündel aus allen Polarwinkeln ein Lichtblatt erzeugen. Eine gesonderte Lichtblatterzeugung ist hier nicht nötig. Weiterhin ist im Falle einer Erzeugung des Lichtblatts durch die Beleuchtungsoptik - Ausführungsbeispiele gemäß Fig. 2 und 3 - eine gesonderte Lichtblatterzeugung nicht notwendig.

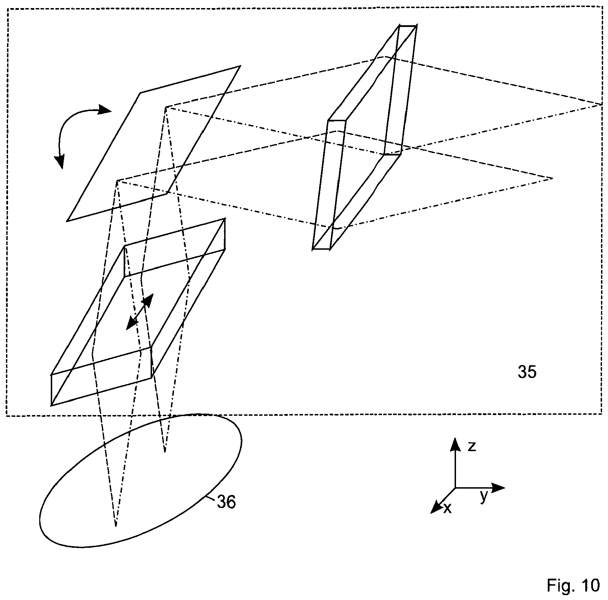

In allen anderen Fällen kann die Erzeugung des Lichtblatts gemäß dem in Fig. 10 in einer schematischen Darstellung gezeigten Ausführungsbeispiel einer Lichtblatterzeugung durch eine Abtastbewegung durch ein Scansystem 35 senkrecht zum angelegten Feldwinkel und eine kollimierte Beleuchtung der Pupille 36 der Beleuchtungsoptik erzeugt werden.

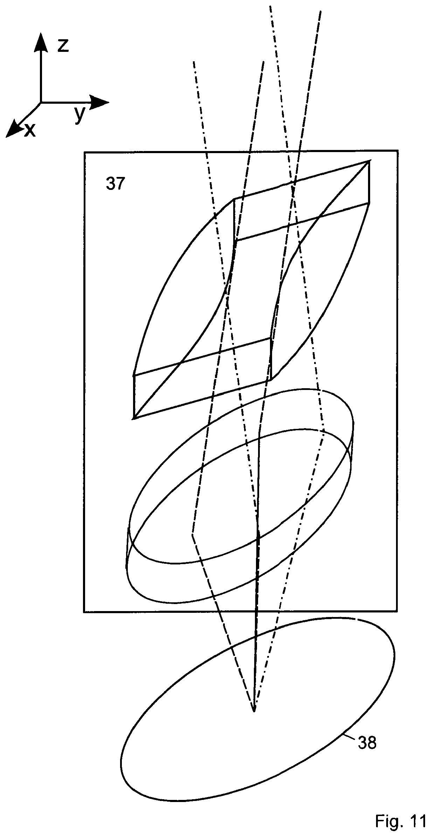

Fig. 11 zeigt in einer schematischen Darstellung ein weiteres Ausführungsbeispiel einer Lichtblatterzeugung, wobei hier das Lichtblatt durch eine anamorphotische Fokussierung 37 der Teilbündel in die Eintrittspupille 38 der Beleuchtungsoptik, vorzugsweise ein Mikroskopobjektiv, erzeugt wird. Dabei liegt der Azimuth der Fokussierrichtung senkrecht zum Feldwinkel des Teilbündels.

Zur Kontrolle der Interferenzfähigkeit der Teilstrahlen können zwei unterschiedliche Konzepte realisiert werden. Bei der Nutzung von zwei Teilstrahlen kann der Polarisationszustand der beiden Teilstrahlen kontrolliert werden. Dies kann bei den Ausführungsformen gemäß Fig. 5 und Fig. 6 durch Einbringen einer λ/2-Platte in einen Teilstrahl erfolgen, sofern die Teilstrahlen räumlich getrennt voneinander vorliegen. Falls die Teilstrahlen nicht räumlich getrennt vorliegen, können beide Teilstrahlen mittels eines um 45° gedrehten Linearpolarisators auf eine Polarisationsrichtung projiziert werden.

Bei der Nutzung von N>2 Teilstrahlen kann durch Einbringen einer - rotierenden - Streuscheibe die Kohärenz des Beleuchtungslichts zerstört werden, so dass keine Interferenz stattfinden kann.

Es kann förderlich sein, den Polarwinkel der Richtung zu variieren, aus welchem die Beleuchtung erfolgt, um Abschattungseffekte weiter zu reduzieren.

Bei einem weiteren Ausführungsbeispiel könnte das komplette Beleuchtungssystem oder zumindest die Teilungseinrichtung und die Spiegelanordnung mechanisch um die optische Achse gedreht werden.

Bei einem weiteren Ausführungsbeispiel könnte die Spiegelanordnung dergestalt ausgeformt sein, dass eine Lichtblatt-Beleuchtung aus mehreren Polarrichtungen ermöglicht wird, bspw. mit mehreren Spiegelpaaren oder einem Ringspiegel. Dann genügt es, die Teilungseinrichtung und die Lichtblatterzeugung mechanisch um die optische Achse zu rotieren.

Bei einer weiteren Ausführungsform könnte die Spiegelanordnung dergestalt vorliegen, dass eine Lichtblatt-Beleuchtung aus mehreren Polarrichtungen ermöglicht wird. Es könnte hierbei ein optisches Rotationselement - Rotationsprisma oder K-Spiegel - zwischen dem Mittel zur Lichtblatterzeugung und der Beleuchtungsoptik genutzt werden, um den Polarwinkel der Beleuchtung zu drehen.

Bei einem weiteren Ausführungsbeispiel könnten die Ausführungsbeispiele gemäß den Figuren 7, 8 oder 9 - bei Verwendung eines Axicons bzw. eines verspiegelten Kegels hinsichtlich der Ausführungsbeispiele in den Figuren 8 bzw. 7 - zur Erzeugung der Teilstrahlen genutzt werden, sowie eine Spaltblende zur Beschränkung auf zwei gegenüberliegende Polarwinkelbereiche. Durch Drehung der Spaltblende kann bei diesem Ausführungsbeispiel der Polarwinkel ±β der entgegenlaufenden Lichtblätter bestimmt werden.

Hinsichtlich weiterer vorteilhafter Ausgestaltungen der erfindungsgemäßen Lehre wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele lediglich zur Erörterung der beanspruchten Lehre dienen, diese jedoch nicht auf die Ausführungsbeispiele einschränken.

### Bezugszeichenliste

- 1: Beleuchtungslichtstrahl
- 2: Teilungseinrichtung
- 3: Teilbündel
- 4: Teilbündel
- 5: Spiegelanordnung
- 6: Beleuchtungsbereich
- 7: Probe
- 8: Detektionsoptik
- 9: Beleuchtungsoptik
- 10: Mittel zur Lichtblatterzeugung
- 11: Mittel zur Kontrolle und/oder Beeinflussung der Kohärenz
- 12: Teilbündel zur Erzeugung eines Lichtblatts
- 13: Teilbündel zur Erzeugung eines Lichtblatts
- 14: Probenbehälter
- 15: Einbettmedium
- 16: Spacer
- 17: Probenträger
- 18: Aperturbündel
- 19: Photodetektor/Kamera
- 20: Zylinderlinse
- 21: Planplatte
- 22: Nomarski-Prisma
- 23: Austrittspupille
- 24: Optik
- 25: Verzögerungselement
- 26: Schicht
- 27: λ/2-Schicht
- 28: λ/2-Schicht
- 29: Reflektionsprisma
- 30: Austrittspupille
- 31: Transmissionsprisma
- 32: Austrittspupille
- 33: Blende
- 34: Abbildungsoptik
- 35: Scan-System
- 36: Pupille
- 37: Fokussierung
- 38: Eintrittspupille

## Patentansprüche

1. Optische Anordnung in einem Mikroskop, mit
- einer Beleuchtungseinrichtung mit einer Beleuchtungsoptik (9) zur Erzeugung eines auf einer Beleuchtungsseite verlaufenden Beleuchtungslichtstrahls (1),
- einer Teilungseinrichtung (2) zur Aufteilung des Beleuchtungslichtstrahls (1) in mindestens zwei Teilbündel (3, 4), damit diese gemeinsam dieselbe Ebene einer Probe (7) beleuchten, und
- einer Spiegelanordnung (5) zur Reflexion der Teilbündel (3, 4) in einen Beleuchtungsbereich (6) für eine Ebenenbeleuchtung einer Probe (7), und
mit einem Mittel zur jeweiligen Erzeugung eines Lichtblatts aus den mindestens zwei Teilbündeln (3, 4),
- und einer Detektionsoptik (8), **dadurch gekennzeichnet,**
- **dass** die Spiegelanordnung (5) vor der Beleuchtungsoptik (9) vorgefasst ist und sich im Sichtfeld der Beleuchtungsoptik (9) befindet,
- **dass** die mindestens zwei Teilbündel (3, 4; 12,13) derart durch die Beleuchtungsoptik (9) geführt werden, dass sie auf die Spiegelanordnung (5) treffen und durch die Spiegelanordnung (5) die Teilbündel (3, 4; 12, 13) auf die Probe reflektiert werden,
- und **dass** koaxial zu einer optischen Achse der Beleuchtungsoptik (9) auf der der Beleuchtungsseite abgewandten Seite des Beleuchtungsbereichs (6) eine Detektionsoptik (8) angeordnet ist.

2. Anordnung nach Anspruch 1, **dadurch gekennzeichnet, dass** die Spiegelanordnung (5) eine oder mehrere Gruppen von Spiegeln oder Planspiegeln oder einen Ringspiegel oder mehrere Ringspiegelsegmente aufweist.

3. Anordnung nach einem der Ansprüche 1 bis 2, **dadurch gekennzeichnet, dass** die Teilungseinrichtung (2) eine Polarisationsoptik oder Elemente zur Pupillenteilung, reflektive oder transmittive Elemente, oder mindestens ein Prisma oder eine Blende (33) aufweist.

4. Anordnung nach einem der Ansprüche 1 bis 3, **dadurch gekennzeichnet, dass** nach der Teilungseinrichtung (2) das Mittel (10) zur jeweiligen Erzeugung eines Lichtblatts aus den Teilbündeln (3, 4) angeordnet ist.

5. Anordnung nach Anspruch 4, **dadurch gekennzeichnet, dass** das Mittel (10) zur jeweiligen Erzeugung eines Lichtblatts eine Zylinderoptik oder einen Scanner (35) aufweist.

6. Anordnung nach einem der Ansprüche 1 bis 5, **dadurch gekennzeichnet, dass** die Teilbündel (3, 4) oder Lichtblätter von einer optischen Achse vorgebbar beabstandet und parallel zur optischen Achse oder nahe der optischen Achse und unter einem Winkel ungleich 0° zur optischen Achse geführt sind.

7. Anordnung nach einem der Ansprüche 1 bis 6, **dadurch gekennzeichnet, dass** die Anordnung ein Mittel zur Kontrolle und/oder Beeinflussung der Kohärenz (11) des Beleuchtungslichtstrahls (1) aufweist.

8. Anordnung nach einem der Ansprüche 1 bis 7, **dadurch gekennzeichnet, dass** die Anordnung ein Mittel zur Kontrolle und/oder Beeinflussung der Interferenzfähigkeit der Teilbündel (3, 4) oder Lichtblätter im Beleuchtungsbereich (6) aufweist.

9. Anordnung nach einem der Ansprüche 1 bis 8, **dadurch gekennzeichnet, dass** die Anordnung ein Mittel zur selektiven Beeinflussung des Polarisationszustands und/oder der Kohärenzlänge mindestens eines Teilbündels (3, 4) oder Lichtblatts aufweist.

10. Anordnung nach einem der Ansprüche 1 bis 9, **dadurch gekennzeichnet, dass** die Anordnung ein Mittel zur Phasenänderung mindestens eines Teilbündels (3, 4) oder Lichtblatts aufweist.

11. Anordnung nach einem der Ansprüche 1 bis 10, **dadurch gekennzeichnet, dass** die Polarwinkel einer Einfallsrichtung der Teilbündel (3, 4) oder Lichtblätter relativ zum Beleuchtungsbereich (6) oder relativ zu der Probe (7) einstellbar oder veränderbar sind, wobei die Teilungseinrichtung (2) und weiter die Teilungseinrichtung (2) und die Spiegelanordnung (5) um eine optische Achse drehbar sind.

12. Mikroskop mit einer optischen Anordnung nach einem der Ansprüche 1 bis 11.

## Claims

1. Optical arrangement in a microscope, comprising
- an illumination device comprising an illumination optical unit (9) for generating an illumination light beam (1) propagating on an illumination side,
- a splitter device (2) for splitting the illumination light beam (1) into at least two partial beams (3, 4) so that these together illuminate the same plane of a sample (7), and
- a mirror arrangement (5) for reflecting the partial beams (3,4) into an illumination region (6) for a planar illumination of a sample (7), and
comprising a means for the respective generation of a light sheet from the at least two partial beams (3,4),
- a detection optical unit (8),
**characterized**
- **in that** the mirror arrangement (5) is held in front of the illumination optical unit (9) and situated in the field of view of the illumination optical unit (9),
- **in that** the at least two partial beams (3, 4; 12, 13) are guided through the illumination optical unit (9) in such a way that they strike the mirror arrangement (5) and said partial beams (3, 4; 12, 13) are reflected onto the sample by the mirror arrangement (5),
- and **in that** a detection optical unit (8) is disposed coaxially with respect to an optical axis of the illumination optical unit (9) on the side of the illumination region (6) distant from the illumination side.

2. Arrangement according to Claim 1, **characterized in that** the mirror arrangement (5) comprises one or more groups of mirrors or plane mirrors or a ring mirror or a plurality of ring mirror segments.

3. Arrangement according to either of Claims 1 and 2, **characterized in that** the splitter device (2) comprises a polarisation optical unit or elements for pupil splitting, reflective or transmissive elements, or at least one prism or a stop (33).

4. Arrangement according to any one of Claims 1 to 3, **characterized in that** the means (10) for the respective generation of a light sheet from the partial beams (3, 4) is disposed downstream of the splitter device (2).

5. Arrangement according to Claim 4, **characterized in that** the means (10) for the respective generation of a light sheet comprises a cylindrical optical unit or a scanner (35).

6. Arrangement according to any one of Claims 1 to 5, **characterized in that** the partial beams (3, 4) or light sheets are guided with a predetermined distance from an optical axis and parallel to the optical axis or in the vicinity of the optical axis and at an angle not equal to the 0° with respect to the optical axis.

7. Arrangement according to any one of Claims 1 to 6, **characterized in that** the arrangement comprises a means for controlling and/or influencing the coherence (11) of the illumination light beam (1).

8. Arrangement according to any one of Claims 1 to 7, **characterized in that** the arrangement comprises a means for controlling and/or influencing the ability of the partial beams (3, 4) or light sheets to interfere in the illumination region (6).

9. Arrangement according to any one of Claims 1 to 8, **characterized in that** the arrangement comprises a means for selectively influencing the polarisation state and/or the coherence length of at least one partial beam (3, 4) or light sheet.

10. Arrangement according to any one of Claims 1 to 9, **characterized in that** the arrangement comprises a means for changing the phase of at least one partial beam (3, 4) or light sheet.

11. Arrangement according to any one of Claims 1 to 10, **characterized in that** the polar angles of the direction of incidence of the partial beams (3, 4) or light sheets relative to the illumination region (6) or relative to the sample (7) are adjustable or modifiable, wherein the splitter device (2) and, further, the splitter device (2) and the mirror arrangement (5) are rotatable about an optical axis.

12. Microscope comprising an optical arrangement according to any one of Claims 1 to 11.

## Revendications

1. Système optique dans un microscope, doté
- d'un dispositif d'éclairage doté d'une optique d'éclairage (9) destiné à produire un faisceau d'éclairage (1) sur un côté d'éclairage,
- d'un dispositif de subdivision (2) pour diviser le faisceau d'éclairage (1) en au moins deux faisceaux partiels (3, 4), de sorte que ceux-ci éclairent ensemble le même plan d'un échantillon (7), et
- d'un système de miroir (5) destiné à réfléchir les faisceaux partiels (3, 4) dans une zone d'éclairage (6) pour un éclairage plan d'un échantillon (7), et doté d'un moyen pour produire respectivement une lame de lumière à partir des au moins deux faisceaux partiels (3, 4),
- et d'une optique de détection (8),
**caractérisé en ce que**
- le système de miroir (5) est préconçu avant l'optique d'éclairage (9) et se trouve dans le champ visuel de l'optique d'éclairage (9), **en ce que**
- les au moins deux faisceaux partiels (3, 4 ; 12, 13) sont guidés par l'optique d'éclairage (9) de façon à converger sur le système de miroir (5) et les faisceaux partiels (3, 4 ; 12, 13) sont réfléchis sur l'échantillon par le système de miroir (5), et **en ce que**
- une optique de détection (8) est agencée coaxialement à un axe optique de l'optique d'éclairage (9) sur un côté de la zone d'éclairage (6) se détournant du côté d'éclairage.

2. Système selon la revendication 1, **caractérisé en ce que** le système de miroir (5) comporte un ou plusieurs groupes de miroirs ou de miroirs plans ou un miroir annulaire ou plusieurs éléments de miroir annulaire.

3. Système selon l'une des revendications 1 et 2, **caractérisé en ce que** le dispositif de subdivision (2) comporte une optique de polarisation ou des éléments de subdivision par pupille, des éléments de réflexion ou de transmission, ou au moins un prisme ou un diaphragme (33) .

4. Système selon l'une des revendications 1 à 3, **caractérisé en ce que** le moyen (10) pour produire respectivement une lame de lumière à partir des faisceaux partiels (3, 4) est agencé après le dispositif de subdivision (2).

5. Système selon la revendication 4, **caractérisé en ce que** le moyen (10) pour produire respectivement une lame de lumière comporte une optique cylindrique ou un scanner (35) .

6. Système selon l'une des revendications 1 à 5, **caractérisé en ce que** les faisceaux partiels (3, 4) ou les lames de lumière possèdent un écart pouvant être prédéfini par rapport à un axe optique et sont guidés parallèlement à l'axe optique ou à proximité de l'axe optique et avec un angle par rapport à l'axe optique différent de 0°.

7. Système selon l'une des revendications 1 à 6, **caractérisé en ce que** le système comporte un moyen pour contrôler et/ou pour influer sur la cohérence (11) du faisceau d'éclairage (1).

8. Système selon l'une des revendications 1 à 7, **caractérisé en ce que** le système comporte un moyen pour contrôler et/ou pour influer sur la capacité d'interférence des faisceaux partiels (3, 4) ou des lames de lumière dans la zone d'éclairage (6).

9. Système selon l'une des revendications 1 à 8, **caractérisé en ce que** le système comporte un moyen pour influer sélectivement sur l'état de polarisation et/ou la longueur de cohérence d'au moins un faisceau partiel (3, 4) ou lame de lumière.

10. Système selon l'une des revendications 1 à 9, **caractérisé en ce que** le système comporte un moyen de changement de phase pour au moins un faisceau partiel (3, 4) ou lame de lumière.

11. Système selon l'une des revendications 1 à 10, **caractérisé en ce que** les angles polaires d'une direction d'incidence des faisceaux partiels (3, 4) ou des lames de lumière par rapport à la zone d'éclairage (6) ou par rapport à l'échantillon (7) sont paramétrables ou modifiables, dans lequel le dispositif de subdivision (2) et en outre le dispositif de subdivision (2) et le système de miroir (5) peuvent tourner autour d'un axe optique.

12. Microscope doté d'un système optique selon l'une des revendications 1 à 11.
